Europäisches Patentamt

European Patent Office

Office européen des brevets

(19)

(11) Veröffentlichungsnummer : **0 035 073**
**B1**

# EUROPÄISCHE PATENTSCHRIFT

(12)

(45) Veröffentlichungstag der Patentschrift :
13.06.84

(51) Int. Cl.³ : **F 16 K 47/02**

(21) Anmeldenummer : **80200285.7**

(22) Anmeldetag : **28.03.80**

(54) **Ventil mit einer Einrichtung zur Dämpfung von durch das Arbeitsmedium selbsterregten akustischen Schwingungen.**

(30) Priorität : **28.02.80 CH 1587/80**

(43) Veröffentlichungstag der Anmeldung :
**09.09.81 Patentblatt 81/36**

(45) Bekanntmachung des Hinweises auf die Patenterteilung : **13.06.84 Patentblatt 84/24**

(84) Benannte Vertragsstaaten :
**CH DE FR SE**

(56) Entgegenhaltungen :
**DE-A- 2 334 576**
**DE-C-  612 409**
**DE-C- 1 259 154**
**GB-A- 1 016 020**
**US-A- 3 695 290**
**Soviet Inventions Illustrated Week B 41, 21. November 1979, Section Q 66**

(73) Patentinhaber : **BBC Aktiengesellschaft Brown, Boveri & Cie.**
**Haselstrasse**
**CH-5401 Baden (CH)**

(72) Erfinder : **Keller, Jakob, Dr.**
**Zelgmattstrasse 4**
**CH-8956 Killwangen (CH)**

EP 0 035 073 B1

Jouve, 18, rue St-Denis, 75001 Paris, France

## Beschreibung

Die vorliegende Erfindung betrifft ein Ventil mit einer Einrichtung zur Dämpfung von durch das Arbeitsmedium selbsterregten akustischen Schwingungen nach dem Oberbegriff des Anspruchs 1.

In Ventilen, bei denen nach dem vom Ventilsitz und dem Ventilschliesskörper gebildeten Drosselringspalt zum Zwecke der Rückgewinnung von Druckenergie ein Diffusor vorgesehen ist, werden häufig Strömungszustände durchlaufen, dei denen Diffusorschwingungen auftreten. Diese rühren daher, dass die Stelle, an dem sich die Strömung im Diffusor ablöst, auf Druckstörungen sehr empfindlich reagiert und dabei in einem gewissen Bereich hin und her schwingt. Besonders stark zeigt sich dieser Effekt an konvexen Wandungen, an den sich die Strömung periodisch ansaugen kann. Eine ähnliche Erscheinung kann auch auftreten, wenn der Druck nach dem Drosselquerschnitt wesentlich niedriger liegt als der kritische Druck. In diesem Falle kann der Prandtl-Meyersche Winkel so gross werden, dass sich die Strömung selbst nach einer Abreisskante im Diffusor wieder an der Wand ansaugen kann. Auch hier gibt es ein bestimmtes Druckverhältnis, bei dem die Ablösung auf Druckschwankungen sehr empfindlich reagiert.

Es sind Absperr- und Drosseleinrichtungen bekannt, bei denen infolge strömungstechnisch ungünstiger Gestaltung des Diffusors oder eines sonstwie gestalteten Abströmkanals stromabwärts des Ventilschliess- oder Drosselkörpers stark störende Geräusche auftreten, verursacht durch Wirbel und Schwingungen des Strömungsmittels und Vibrationen von Bestandteilen der Einrichtung. Die erwähnte ungünstige Gestaltung des Abströmkanals ist hauptsächliche bedingt durch konstruktive Vereinfachungen des Abströmkanals zum Zwecke billigerer Herstellung.

Besagte Geräuschentwicklungen der eingangs genannten Art treten aber auch an strömungsgünstiger geformten Abströmkanälen auf. Je nach Art der Strömung des Mediums, die in erster Linie von der Geschwindigkeit, implizit also vom Massenstrom, dem Drosselquerschnitt und dem Druckverhältnis, aber auch von der Gestalt und Oberflächenbeschaffenheit des Abströmkanals abhängt, versucht man mit verschiedenen Massnahmen, eine Geräuschminderung zu erreichen. Im allgemeinen beruhen diese Massnahmen darauf, der Strömung im Bereich der Wirbelbildung oder sonstigen Störung Energie zuzuführen, indem dieser Bereich mit einem Raum höheren Druckes in Verbindung gebracht wird, in dem das Strömungsmedium unter höherem Druck steht als im Bereich der gestörten Strömung. Man vermindert damit die Wirbelbildung durch Beeinflussung der Grenzschicht.

Es sind Einrichtungen der gegenständlichen Art bekannt, bei denen Medium aus dem Raum vor dem Ventilschliesskörper über Bypassbohrungen in die Strömung im Abströmkanal zugeführt werden. Da diese Bypassbohrungen im Verhältnis zum Querschnitt des Abströmkanals sehr klein sind und die Druckdifferenz über die Bohrungen entsprechend den Drücken vor und hinter dem Ventilschliesskörper sehr hoch ist, stellen solche Bypassbohrungen infolge Wirbelablösungen und Verdichtungsstössen an den Bohrungskanten eher zusätzliche Schallquellen dar als dass sie geräuschdämpfend wirken. Bei Hochdruckdampfventile z. B. sind solche Bypassbohrungen wirkungslos.

Eine Anwendung solcher Bypassbohrungen bei einer Drosseleinrichtung ist beispielswiese in einer Schrift der Reihe « Soviet Inventions Illustrated » gezeigt (Ausgabe « Week B41 » vom 21.11.1979, Sektion Q66, Bezugnahme auf SU-A-640.080).

Eine zweite bekannte Methode besteht darin, als Raum höheren Druckes eine Stelle unmittelbar nach dem Diffusoraustritt heranzuziehen, an der gegenüber der Stelle der stärksten Geräuschentwicklung ein geringerer Ueberdruck herrscht als bei der erstgenannten Methode und damit die bei dieser auftretenden akustischen Erscheinungen vermieden werden.

Auf dieser zweiten Methode beruhen beispielsweise die Dämpfungseinrichtung nach dem GB-Patent 1,016,020 und dem DE-patent 1 259 154. In beiden Fällen wird dabei Medium aus dem Raum hinter dem Diffusoraustritt abgezweigt und durch Ringspalte dem Abströmkanal an einer Stelle zugeführt, wo infolge abrupter Querschnittserweiterungen starke Wirbelbildung auftritt, die durch den zurückgeführten Anteil des Strömungsmediums verringert wird. Die erwähnten Ringspalte leiten dabei das zurückzuführende Medium in die Grenzschicht, wodurch der Geschwindigkeitsgradient in derselben verkleinert wird, was dann zur Schwächung der Wirbel und somit zur Geräuschdämpfung führt.

Diese zuletzt genannten Einrichtungen sind aber nicht brauchbar bei Hochdruckdampfventilen mit grossem Massenstrom, bei denen die Strömungsgeschwindigkeiten wegen der aus Festigkeits- und Kostengründen doch beschränkten Abmessungen des Ventils und damit der Strömungsquerschnitte extrem hoch sind. Bei diesen Strömungsgeschwindigkeiten treten die eingangs erwähnten akustischen Phänomene besonders stark störend auf.

Mit der vorliegenden, im kennzeichnenden Teil des Anspruchs 1 definierten Erfindung sollen die mit diesen Erscheinungen verbundenen Schwingungen, die einen besonders unangenehmen Lärm verursachen, und auch die Festigkeit der Ventilkomponenten beeinträchtigen können, weitgehend unterdrückt werden.

Anhand der in der Zeichnung dargestellten Ausführungsbeispiele wird der Erfindungsgegenstand nachfolgend näher beschrieben. In der Zeichnung stellen dar :

Figur 1   eine erste Ausführungsform eines erfindungsgemässen Ventils,

Figur 2   eine zweite Ausführungsform eines erfindungsgemässen Ventils, und die

Figuren 3 und 4 zwei verschiedene Ausführungsformen der erfindungswesentlichen Details solcher Ventile.

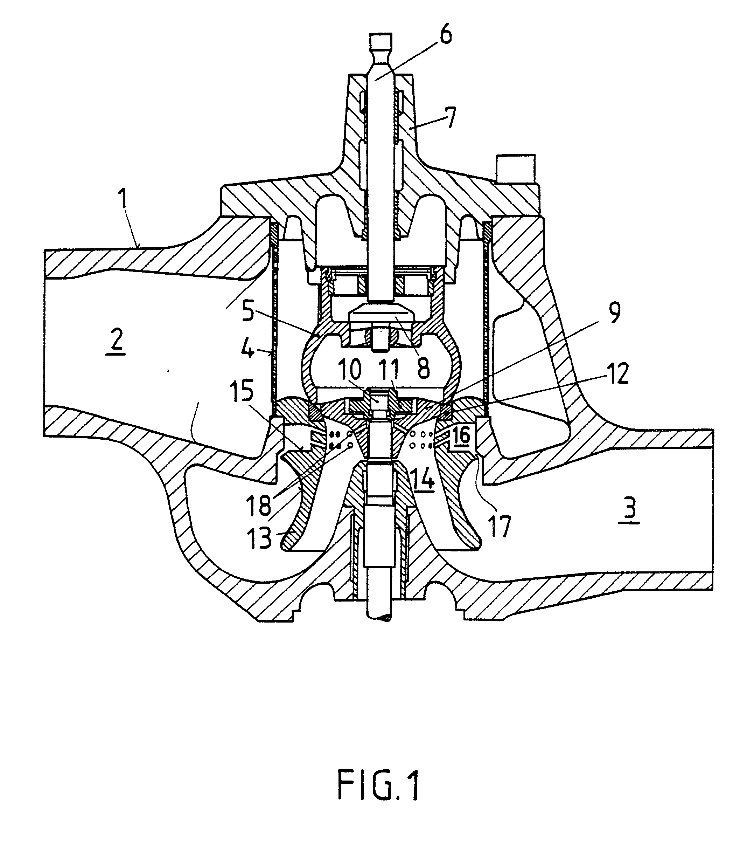

Fig. 1 stellt ein kombiniertes Dampfschnellschluss- und -regelventil dar. Das Ventilgehäuse 1 weist einen Einlasskanal 2 und einen Auslasskanal 3 auf. In Strömungsrichtung nach dem Einlasskanal 2 und einem Dampfsieb 4 befindet sich eine Regelglocke 5, die ebenso wie ihre Spindel 6 in einem Flanschgehäuse 7 geführt ist. Ein auf der Spindel 6 befestigtes Vorhubventil 8 dient in bekannter Weise zur Erleichterung des Oeffnungsvorganges.

Koaxial innerhalb der Regelglocke 5 befindet sich ein Schnellschlussventilkörper 9, dessen Spindel 10 im unteren Teil des Gehäuses gelagert ist. Diese Spindel 10 trägt an ihrem oberen Ende ebenfalls ein Vorhubventil 11 zur Erleichterung des Oeffnungsvorganges.

Für die Sitzflächen der beiden Ventilkörper 5 und 9 ist ein gemeinsamer Ventilsitzring 12 vorhanden, der in einem Diffusorkörper 13 eingelassen ist. Dieser besitzt an seinem äusseren Umfang im Bereich des engsten Querschnitts des Diffusorkanals 14 eine Ringnut 15, die mit der benachbarten Bohrungswand des Gehäuses 1 eine Ringkammer 16 bildet. Im übrigen ist die Aussenkontur des Diffusorkörpers 13 so geformt, dass die Kammer 16 über einen ringförmigen Schlitz 17 mit dem Auslasskanal 3 in Verbindung steht, so dass sich zur Kammer 16 eine Strömung einstellen kann, da der Druck im Auslasskanal 3 im Betrieb höher ist als der Druck an der engsten Stelle des Diffusorkanals 14 im Bereich der vertikalen Erstreckung der Ringkammer 16.

Diese Ringkammer steht über zwei Reihen von Löchern 18, die über den Umfang gleichmässig verteilt angeordnet sind und deren Mündungen im Bereich des engsten Querschnitts des Diffusorkanals liegen, mit letzterem in leitender Verbindung. Die Löcher 18 haben den Zweck, die in der Einleitung erwähnte Fixierung des Ablösungspunktes im Diffusor zu bewirken, um ein Schwingen des Ablösungspunktes und die dadurch bedingten akustischen Erscheinungen zu vermeiden. Dies wird erreicht durch eine sekundäre Zuströmung in den Diffusorraum im Bereich des Ablösungspunktes, indem aus der Ringkammer 16, in der, wie oben dargelegt, im Betrieb der Druck höher ist als im Bereich des engsten Diffusorquerschnitts, durch die Löcher 18 Arbeitsmedium in den Diffusor eingeblasen wird.

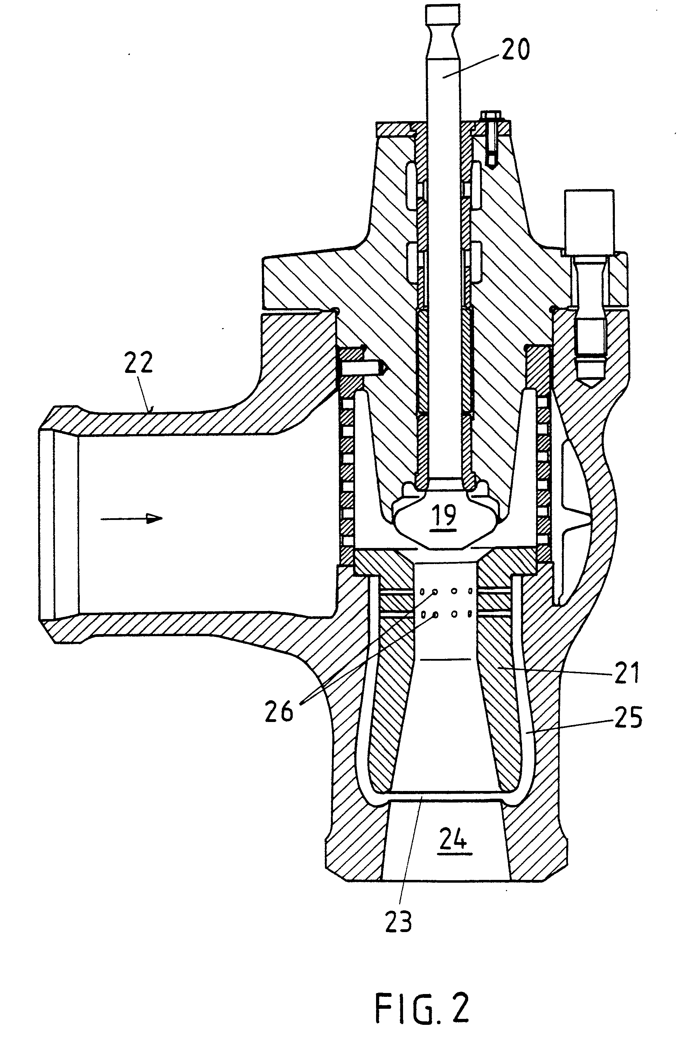

Eine Möglichkeit für die Ausbildung der erfindungsgemässen Merkmale an einem einfachen Regelventil zeigt die Fig. 2. Der Regelventilkörper 19 und seine Spindel 20 befinden sich hier stromaufwärts des Ventilsitzringes des Diffusorkörpers 21. Das untere Ende desselben bildet mit einer Erweiterung im unteren Teil des Ventilgehäuses 22 einen Ringschlitz 23, der den Auslasskanal 24 mit dem von der Aussenfläche des Diffusorkörpers 21 und der ihn in einem Abstand umgebenden Erweiterung des Ventilgehäuses 22 begrenzten Ringraum 25 verbindet. Der obere Teil dieses Ringraumes 25 steht wiederum über zwei Reihen über den Diffusorumfang gleichmässig verteilter Löcher 26 mit dem Bereich des engsten Diffusorkanalquerschnitts in Verbindung. Die stabilisierende Wirkung auf die Lage des Ablösungspunktes ist die gleiche wie bei dem zuerst beschriebenen Ventil.

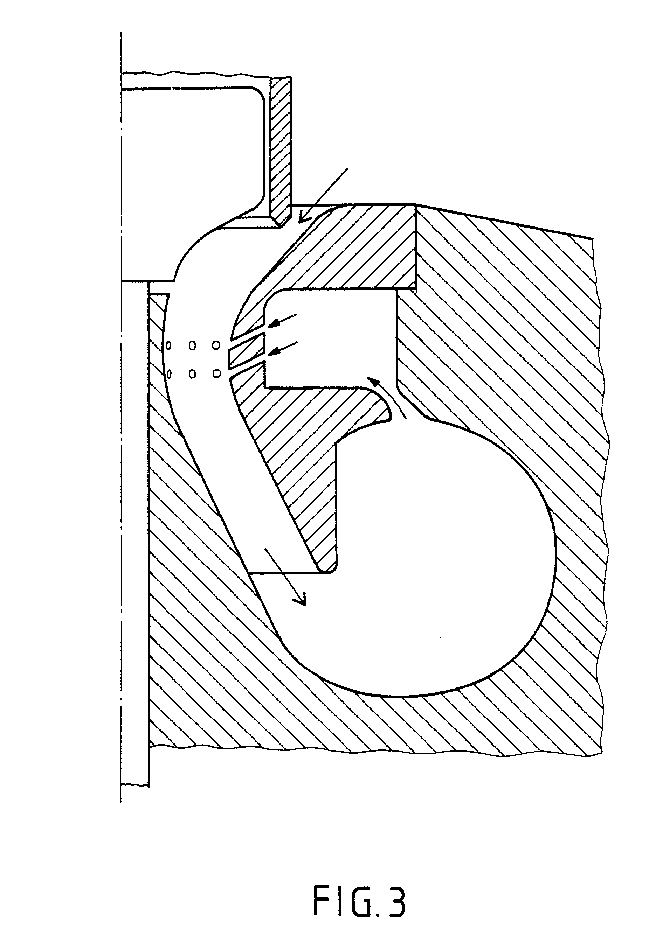

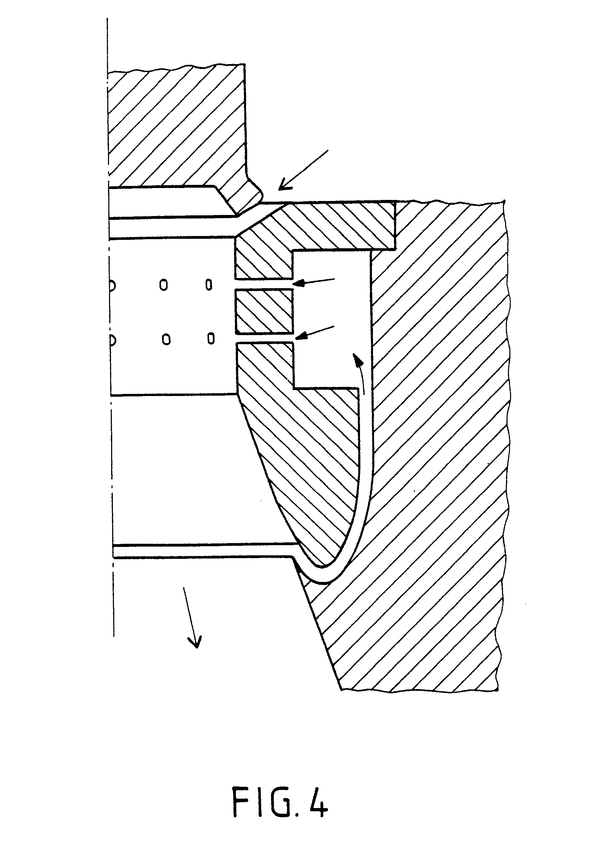

Die Fig. 3 und 4 zeigen schematisch mögliche Abarten der erfindungsgemässen Gestaltung im Bereich des Diffusorkörpers für die Ventile nach den Fig. 1 und 2. Dazu ist allgemein zu bemerken, dass die Ringräume, aus denen über die Löcher 18 bzw. 26 dem Ablösungsbereich Strömungsenergie zugeführt wird, keineswegs so voluminös wie in den Fig. 1, 3 und 4 dargestellt ausgeführt werden müssen. Es genügen dafür vielmehr schon kleine Räume oder aber allein schon Bohrungen, die den Auslasskanal des Ventils oder eine stromabwärts der Diffusorkanaleinschnürung liegende Stelle des Diffusorkanals mit dem Ablösungsbereich verbinden.

Je nach den Strömungsverhältnissen kann die Anzahl der Löcher und Lochreihen verschieden gewählt werden.

Voraussetzung für die Funktion ist natürlich, dass der Druck, wie bei den dargestellten Beispielen, an der Stelle, wo das zur Einführung an die Ablösungsstelle bestimmte Medium abgenommen wird, grösser ist als an der Ablösestelle.

Bezeichnungsliste

1 Ventilgehäuse
2 Einlasskanal
3 Auslasskanal
4 Dampfsieb
5 Regelglocke
6 Spindel der Regelglocke 5
7 Flanschgehäuse
8 Vorhubventil
9 Schnellschlussventilkörper
10 Spindel des Schnellschlussventilkörpers
11 Vorhubventil
12 Ventilsitzring
13 Diffusorkörper
14 Diffusorkanal
15 Ringnut
16 Ringkammer
17 Ringförmiger Schlitz
18 Löcher
19 Regelventilkörper
20 Spindel des Regelventilkörpers
21 Diffusorkörper
22 Ventilgehäuse
23 Ringschlitz
24 Auslasskanal
25 Ringraum
26 Löcher

## Ansprüche

1. Ventil mit mindestens je einem gehäusefesten Ventilsitzring (12) und einem mit diesem zusammenwirkenden Ventilschliesskörper (9, 19), mit einem in Strömungsrichtung des Arbeitsmediums nach dem Ventilsitzring angeordneten Diffusor (13, 21) zur Rückgewinnung von Druckenergie im Arbeitsmedium, sowie mit einer Einrichtung zur Dämpfung von durch das Arbeitsmedium im Diffusor selbsterregten akustischen Schwingungen, welche Einrichtung einen den Diffusormantel umgebenden Ringraum (16, 25) aufweist, der mit einer nach dem Diffusor gelegenen Stelle des Auslasskanals und mit dem Diffusor in leitender Verbindung steht, dadurch gekennzeichnet, dass die Ringkammer (16) über Löcher (18) mit dem Bereich des engsten Diffusorquerschnittes in leitender Verbindung steht.

2. Ventil nach Anspruch 1, dadurch gekennzeichnet, dass die Achsen der Löcher (26) rechtwinklig zur Diffusorachse verlaufen.

3. Ventil nach Anspruch 1, dadurch gekennzeichnet, dass die Achsen der Löcher (18) zur Diffusorachse geneigt sind, derart, dass sie mit der Strömungsrichtung des Arbeitsmittels einen spitzen Winkel einschliessen.

## Claims

1. Valve with at least one valve seat ring (12) integral with the casing in each case and a valve-closing body (9, 19) interacting with the former, with a diffusor (13, 21) arranged downstream of the valve seat ring in the direction of flow of the working medium, for recovering pressure energy in the working medium, and with a device for damping acoustic vibrations self-excited by the working medium in the diffusor, which device has an annular space (16, 25) which surrounds the diffusor shell and is conductively connected to a point of the outlet channel downstream of the diffusor and to the diffusor, characterised in that the annular chamber (16) is conductively connected via holes (18) to the zone of the narrowest diffusor cross-section.

2. Valve according to Claim 1, characterised in that the axes of the holes (26) run at right angles to the diffusor axis.

3. Valve according to Claim 1, characterised in that the axes of the holes (18) are inclined relative to the diffusor axis in such a way that they enclose an acute angle with the direction of flow of the working medium.

## Revendications

1. Valve comportant au moins un anneau de siège de valve (12) fixé au corps de valve et un obturateur de fermeture (9, 19) coopérant avec cet anneau de siège, un diffuseur (13, 21) étant prévu dans le sens de l'écoulement du fluide en aval de l'anneau de siège pour récupérer de l'énergie de pression dans le fluide, ainsi qu'un dispositif pour amortir les vibrations acoustiques produites par le fluide lui-même dans le diffuseur, ce dispositif présentant une chambre annulaire (16, 25) entourant le corps du diffuseur, qui communique avec un endroit de la tubulure de sortie situé en aval du diffuseur et avec le diffuseur, caractérisée en ce que la chambre annulaire (16) communique par l'intermédiaire de perforations (18) avec la zone de la section la plus étroite du diffuseur.

2. Valve suivant la revendication 1, caractérisée en ce que les axes des perforations (26) sont perpendiculaires à l'axe du diffuseur.

3. Valve suivant la revendication 1, caractérisée en ce que les axes des perforations (18) sont inclinés par rapport à l'axe du diffuseur de telle façon qu'ils forment un angle aigu avec la direction d'écoulement du fluide.

FIG.1

FIG. 2

FIG.3

FIG. 4

4